# EUROPEAN PATENT APPLICATION

(11) **EP 3 787 157 A1**
(43) Date of publication of application: **03.03.2021**
(21) Application number: 19793409.4
(22) Date of filing: 15.04.2019
(51) Int. Cl.: H02K 5/14, H02K 13/00

(54) **END COVER USED FOR BRUSHED DIRECT CURRENT MOTOR AND BRUSHED DIRECT CURRENT MOTOR COMPRISING END COVER**

(30) Priority: 25.04.2018 CN 201820596355 U
(71) Applicant: Guangdong Zhaoqing L & V Co. Ltd, Zhaoqing, Guangdong 526238 (CN)
(72) Inventor: GONG, Hongyu, Zhaoqing, Guangdong 526238 (CN); FENG, Chen, Zhaoqing, Guangdong 526238 (CN); ZHU, Jianqiang, Zhaoqing, Guangdong 526238 (CN); WU, Binbin, Zhaoqing, Guangdong 526238 (CN)
(74) Representative: Banzer, Hans-Jörg
(86) International application number: PCT/CN2019/082663
(87) International publication number: WO 2019/205973

(57) **Abstract**

The present application provides an end-cap for a DC brush motor, the end-cap being provided with a power source, two carbon brushes and two sets of multiple rod-shaped inductors connected in series, one end of a first set of multiple rod-shaped inductors connected in series is connected to a positive pole of the power source, the other end of the first set of multiple rod-shaped inductors connected in series is connected to a first carbon brush, one end of a second set of multiple rod-shaped inductors connected in series is connected to a second carbon brush, and the other end of the second set of multiple rod-shaped inductors connected in series is connected to a negative pole of the power source. The present application also provides a DC brush motor. In the present application, two sets of multiple rod-shaped inductors connected in series are arranged on the end-cap of the DC brush motor, such that the inductance in the power supply circuit can be increased without increasing the axial length of the motor, thereby improving the EMC property of the motor.

## Description

### CROSS REFERENCE TO RELATED APPLICATION

The present invention claims the priority and right of Chinese Patent Application No. 201820596355.5, filed on April 25, 2018, the disclosure of which is incorporated herein by reference as a part of the present application.

### FIELD OF TECHNIQUE

The present application relates to mechanical field, in particular to an end-cap for a direct-current brush motor (DC brush motor) and a DC brush motor including the end-cap.

### TECHNICAL BACKGROUND

DC brush motor is one type of DC motors, the manufacture process of which is mature, and has been widely applied in various fields. In the prior art, a DC brush motor is mainly consisted of a housing, a stator, a rotor, an end-cup and other components. The front and rear ends of the DC brush motor output power via a shaft connected to the rotor. The stator is for providing a magnetic field. After being powered, coils of a rotor winding generate torque in magnetic field, and commutation is achieved via a commutator on the rotor and carbon brushes on the end-cap to achieve continuous rotation of the rotor. The DC brush motor has a power source and two carbon brushes on its end-cap. A positive pole of the power source connected to one carbon brush, and a negative pole of the power source connected to the other carbon brush, such that a power supply circuit running through the positive pole of the power source, the first carbon brush, the commutator, the rotor winding, the second carbon brush and the negative pole of the power source is formed so as to transmit electric energy to the rotor. A rod-shaped inductor is disposed respectively between the positive pole of the power source and the first carbon brush and between the negative pole of the power source and the second carbon brush to improve EMC (Electro Magnetic Compatibility) property of the motor.

In the prior art, on the end-cup of the DC brush motor, only one rod-shaped inductor is disposed respectively between the positive pole of the power source and the first carbon brush and between the negative pole of the power source and the second carbon brush. The inductance of the rod-shaped inductor is related to its length and diameter. Without changing the diameter, the inductance can be increased only when the length of the rod-shaped inductor is increased, which may cause an increase of the axial length of the motor end-cap, thereby further causing an increase of the axial length of the entire motor.

### BRIEF DESCRIPTION

In order to solve the above problem, the present application provides an end-cap for a DC brush motor, wherein the end-cap is provided with a power source, two carbon brushes and two sets of multiple rod-shaped inductors connected in series, one end of a first set of multiple rod-shaped inductors connected in series is connected to a positive pole of the power source, the other end of the first set of multiple rod-shaped inductors connected in series is connected to a first carbon brush, one end of a second set of multiple rod-shaped inductors connected in series is connected to a second carbon brush, and the other end of the second set of multiple rod-shaped inductors connected in series is connected to a negative pole of the power source.

Alternatively, the length of each rod-shaped inductor can be adjusted.

Alternatively, each set of multiple rod-shaped inductors connected in series comprises two rod-shaped inductors connected in series.

The present application further provides a DC brush motor comprising a housing, a rotor, a stator and the above end-cap provided by the present application, wherein the rotor is provided with a commutator, and the two carbon brushes are in slide contact with the commutator.

In comparison with the prior art, the end-cap for the DC brush motor and the DC brush motor of the present application at least have the following advantages: in the present application, two sets of multiple rod-shaped inductors connected in series are disposed on the end-cap of the DC brush motor, such that inductance in the power supply circuit of the motor can be increased without increasing an axial length of the motor, thereby improving the EMC property of the motor. In addition, the total inductance of multiple rod-shaped inductors connected in series can be adjusted by adjusting the length of each rod-shaped inductor in the plurality of rod-shaped inductors connected in series, thereby allowing the same motor to have better adaptability.

### BRIEF DESCRIPTION OF THE DRAWINGS

FIG. 1 shows an end-cap of a DC brush motor according to one specific embodiment of the present application.
FIG. 2 shows two rod-shaped inductors connected in series.

### DETAILED DESCRIPTION

In the following text, the end-cap for the DC brush motor and the DC brush motor including the end-cap according to an example of the present application are described hereinafter with reference to the drawings. In the following description, a plurality of specific details is described such that a person skilled in the art could comprehend the present application more thoroughly. However, it is obvious for a person skilled in the art that the implementation of the present application may not include some of the specific details. Furthermore, it shall be understand that the present application is not limited by the illustrated specific example. In the contrary, any combination of the following features and factors may be considered to implement the present application regardless of whether they relate to different examples. Hence, the following aspects, features, examples and advantages are merely for illustration and therefore shall not be regarded as factors or definitions on the claims, only if they are clearly indicted in the claims.

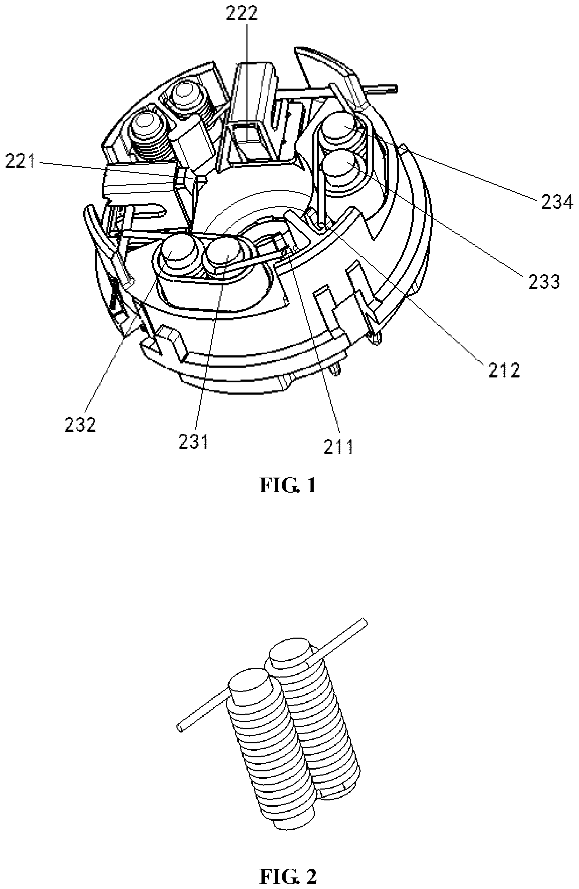

FIG. 1 shows an end-cap for a DC brush motor according to an embodiment of the present application. FIG. 2 shows two rod-shaped inductors connected in series. As shown in FIG. 1 and FIG. 2, the DC brush motor, on its end-cap, is equipped with a power source having two contact pins 211 and 212, two carbon brush 221, 222, and four rod-shaped inductors 231, 232, 233, 234. The contact pin 211 is connected to a positive pole of the power source, and the contact pin 212 is connected to a negative pole of the power source. The rod-shaped inductors 231 and 232 are connected in series, and the rod-shaped inductors 233 and 234 are connected in series. Each rod-shaped inductor is consisted of a core rod and coils wound around the core rod. The contact pin 211 of the power source is connected to one end of the rod-shaped inductor 231, the other end of the stick-inductor 231 is connected to one end of the rod-shaped inductor 232, and the other end of the rod-shaped inductor 232 is connected to a brush pigtail of the carbon brush 221. Similarly, the contact pin 212 of the power source is connected to one end of the rod-shaped inductor 233, the other end of the rod-shaped inductor 233 is connected to one end of the rod-shaped inductor 234, and the other end of the rod-shaped inductor 234 is connected to a brush pigtail of the carbon brush 222. That is to say, two sets of two rod-shaped inductors connected in series are arranged in the power supply circuit.

The end-cap of the DC brush motor shown in FIG. 1 is equipped with two sets of two rod-shaped inductors connected in series. A skilled person in the art may also set up the number of inductors in each set of rod-shaped inductors connected in series according to the actual need, for example arranging three rod-shaped inductors in each set of rod-shaped inductors connected in series. The variations do not go beyond the protection scope of the present application.

In the present application, two sets of multiple rod-shaped inductors connected in series are disposed on the end-cap of the DC brush motor, such that inductance in the power supply circuit of the motor can be increased without increasing the axial length of the motor, thereby improving the EMC property of the motor. In addition, in consideration of cost, the length of each rod-shaped inductor can be chosen according to the actual need and therefore saving the cost.

In the present application, by means of arranging two sets of multiple rod-shaped inductors connected in series on the end-cap of the DC brush motor, the axial length of the end-cap can be reduced by reducing the length of each rod-shaped inductor, with the inductance of the power supply circuit maintaining the same, such that the total axial length of the motor can be reduced.

In the present application, the length of each rod-shaped inductor in the plurality of rod-shaped inductors connected in series can be adjusted, such that the total inductance of the plurality rod-shaped inductors connected in series can be adjusted, thereby allowing the same motor to have better adaptability. In addition, the total inductance can be adjusted by adjusting the diameter or the number of coil turns of each rod-shaped inductor.

The DC brush motor of the present application can be used as a DC motor in a lifting system of an electric tail door of all kinds of vehicles. A person skilled in the art may also apply the DC brush motor of the present application to other appropriate occasions according to the actual needs.

Although the present application is disclosed with a preferable example as above mentioned, it is not limited thereto. All kinds of modifications and amendments made by a person skilled in the art, which do not depart from the spirit and extent of the present application, can be considered to be within the protection scope of the present application, so that the protection scope of the present application shall be depending on the scope defined by the claims.

## Claims

1. An end-cap for a DC brush motor, **characterized in that** the end-cap is provided with a power source, two carbon brushes and two sets of multiple rod-shaped inductors connected in series, one end of a first set of multiple rod-shaped inductors connected in series is connected to a positive pole of the power source, the other end of the first set of multiple rod-shaped inductors connected in series is connected to a first carbon brush, one end of a second set of multiple rod-shaped inductors connected in series is connected to a second carbon brush, and the other end of the second set of multiple rod-shaped inductors connected in series is connected to a negative pole of the power source.

2. The end-cap as claimed in claim 1, **characterized in that** the length of each rod-shaped inductor can be adjusted.

3. The end-cap as claimed in claim 1, **characterized in that** each set of multiple rod-shaped inductors connected in series comprises two rod-shaped inductors connected in series.

4. A DC brush motor comprising a housing, a stator, a rotor and an end-cap as claimed in any one of claims 1 to 3, wherein the rotor is provided with a commutator, and the two carbon brushes are in slide contact with the commutator.
